# EUROPEAN PATENT SPECIFICATION

(11) **EP 3 833 887 B1**
(45) Date of publication and mention of the grant of the patent: **14.10.2026**
(21) Application number: 19758337.0
(22) Date of filing: 01.08.2019
(51) Int. Cl.: F16F 9/36, F16F 9/516, F16F 9/19, F16F 9/32, F16F 9/342, F16F 9/34

(54) **IMPROVEMENTS IN DAMPERS**
VERBESSERUNGEN VON DÄMPFER
PERFECTIONNEMENTS APPORTÉS À DES AMORTISSEURS

(30) Priority: 07.08.2018 GB 201812835
(43) Date of publication of application: 16.06.2021
(73) Proprietor: Titus d.o.o. Dekani, 6271 Dekani (SI)
(72) Inventor: STRAVNIK, Nejc, 6310 Izola (SI); PECAR, David, 6276 Pobegi (SI)
(74) Representative: Treeby, Philip David William
(86) International application number: PCT/EP2019/070836
(87) International publication number: WO 2020/030531

(56) References cited:
- WO-A1-2011/045754
- WO-A1-2013/110939
- WO-A1-2014/115114
- WO-A2-01/14764
- WO-A2-03/014590
- CN-A- 107 401 576
- DE-U1- 20 213 207
- GB-A- 1 602 780
- US-B1- 6 311 813

## Description

This invention relates to dampers.

WO 03/014590 A2 relates to a gas spring adapted to be connected between a movable object and a relatively fixed object for assisting in moving the movable object between a first position and a second position.

DE 202 13 207 U1 relates to a compressed gas spring having an external spring arranged around the piston rod. The pre-tensioning of the external spring can be changed so as to alter an extension force.

US 6 311 813 B1 relates to an axially movable switching sealing ring within a groove having an axial width greater than the axial width of the ring, in particular in the piston of a piston-cylinder unit, where the switching sealing ring has sealing surfaces on its upper side surface, lower side surface and radial outer wall surface in each instance.

WO 01/14764 A2 relates to a multiple stop gas spring having a stop piston assembly and a metering piston assembly, connected and movable with the gas spring shaft.

WO 2014/115114 A1 relates to a shock absorber device including a cylinder containing a fluid, a piston which is slidable axially in the cylinder and connected to an actuation member.

According to the invention there is provided a piston and cylinder type damper having a cylinder containing damping fluid with a piston assembly mounted therein for reciprocal movement along a linear axis, with the piston assembly dividing the cylinder into two separate chambers, with a mechanism being provided for controlling flow of damping fluid between said chambers, the control mechanism including a sealing element movable axially with respect to the piston assembly, with the piston assembly comprising a first end stop, wherein the first end stop is a washer and a second end stop, wherein the second end stop is a flange for limiting said relative axial movement of the sealing element, with the sealing element acting on engagement with the washer to constrain flow of damping fluid to a restricted passageway in the piston assembly, wherein the flange forms an integral part of the piston assembly, with said washer being provided as a separate component, wherein said washer is of a harder material than the piston assembly, wherein said washer includes a fluid flow path that contributes to said restricted passageway.

By way of example, embodiments of the invention will now be described with reference to the accompanying drawings, in which:
Figure 1 is a cross-sectional view of a form of damper according to the invention,
Figure 2 is a detail view of part of the piston assembly for the damper of Figure 1,
Figures 3a, 3b and 3c are detail views of alternative forms of washer for the damper of Figure 1,
Figure 4 is an alternative form of damper according to the invention, and
Figures 5a and 5b show part of the piston assembly for the damper of Figure 4 in stages of its assembly.

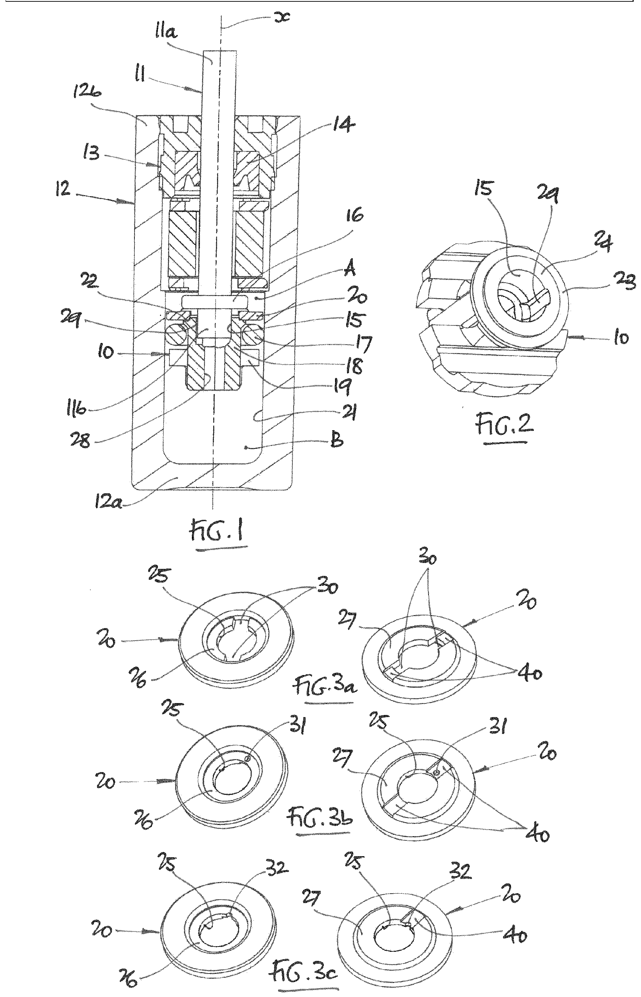

The damper seen in Figure 1 is a linear piston and cylinder type damper having a piston assembly 10, a piston rod 11 and an elongate cylinder 12. The cylinder 12 is of circular cross-section and is closed at one end 12a. It contains a damping fluid, such as oil or silicone. The piston rod 11 is mounted for linear reciprocal movement with respect to the cylinder 12 along its longitudinal axis x. A free end 11a of the piston rod 11 extends out of the cylinder 12 at its other end 12b, which is closed off by a cap assembly 13. The cap assembly 13 provides support for the slidable mounting of the piston rod 11 and has a suitable seal 14 to prevent leakage of damping fluid out of the cylinder 12.

The piston rod 11 extends into the interior of the cylinder 12, where its inner end 11b engages the piston assembly 10. The inner end 11b of the piston rod 11 is received in a counterbore 15 in the piston assembly 10. This helps to provide lateral support for the inner end 11b of the piston rod 11 and guide it in its reciprocal movement along axis x. A collar 16 on the piston rod 11 at its inner end 11b provides an annular reaction surface to help spread loads transmitted to the piston assembly 10. The collar 16 may be formed integrally with the piston rod, for example by stamping, or it may be formed separately and attached by suitable means.

The piston assembly 10 divides the interior of the cylinder 12 into two separate chambers, in Figure 1 upper and lower chambers A and B respectively, and contains a pathway for controlled flow of damping fluid between them. The piston assembly 10 carries an annular seal 17, which here is in the form of an O-ring. This effectively provides a mechanism for controlling the flow of fluid across the piston assembly 10. The seal 17 fits loosely over the body 18 of the piston assembly 10 so as to be free to move axially relative to it. A flange 19 and a washer 20 in axially spaced apart relation capture the seal 17 on the piston assembly body 18 and provide limit stops to its relative axial movement. The outer diameter of the seal 17 is chosen so that it is in slidable sealing engagement with the bore 21 of the cylinder 12. The body 18 of the piston assembly 10 has an outwardly flared section 22 adjacent to the washer 20, with an outer diameter that is slightly greater than the inner diameter of the seal 17.

When the free end 11a of the piston rod 11 experiences an impact tending to compress the damper, the force of the impact will be transmitted via the collar 16 to the piston assembly 10 to drive it into the cylinder 12. This will bring the washer 20, and also the flared section 22 of the piston assembly body 18 into sealing engagement with the seal 17. This effectively seals off the gap around the outside of the piston assembly 10, leaving the pathway through the piston assembly as the only possible route for flow of damping fluid out of the lower chamber B. By controlling the amount of restriction that the pathway presents, the flow through the piston assembly 10 can be tailored to give the desired amount of damped resistance that the damper will produce to the inward movement of the piston rod. This is the working stroke of the damper.

On the return stroke, ie on the outward movement of the piston rod, the seal 17 will move out of engagement with the washer 20 and the flared section 22 of the piston assembly body 18, thereby opening up an additional pathway for flow of fluid around the outside of the piston assembly 10. This is a much larger pathway, meaning that fluid is free to return to the lower chamber B rapidly and substantially without any damping resistance.

The piston assembly 10 here is conveniently produced as an injection moulded plastics component, as is the case with conventional piston assemblies of this nature, with flange 19 forming an integral part of it. Unlike a conventional piston assembly, however, the washer 20 here is provided as a separate component.

Providing the washer 20 as a separate component has the advantage of making it easier to assemble the piston assembly 10, because the seal 17 only has to be fitted over the flared section 22 of the body 18, in contrast to a conventional arrangement, where the seal would have to be fitted over one of the end stops, such as the flange 19. This makes it possible to use a seal 17 that is of a harder and less elastic material than in a conventional damper, allowing it to cope with higher forces than normal and helping to prolong its working life.

The washer 20 acts to transmit forces from the collar 16, caused by inward movement of the piston rod 11, to the piston assembly 10 and hence to the seal 17. It could be made of a suitably hard plastics material, or it could conveniently be produced out of metal in a stamping process. If of metal, it could conveniently be overmoulded with plastics material to improve its slidability. Forming the washer 20 in this manner allows it to be made thinner than an integrally formed flange of a typical piston assembly moulding. This has the benefit of enabling the overall axial length of the piston assembly 10 to be reduced, which allows the damper to be designed with a longer working stroke (for a given overall length). It also enables the washer 20 to transmit forces of a higher magnitude than a typical integrally moulded plastics flange. Ideally, the washer 20 will have an axial thickness of approximately half that of the seal 17.

One suitable form of washer 20 is seen in Figure 3a. On one side, the washer 20 is formed with a dished formation 26. The washer 20 is designed to seat on an axial end face 23 of the piston assembly body 18, with a spigot 24 on the body (seen more clearly in Figure 2) serving to locate the washer by its dished formation 26, whilst leaving a small gap therebetween. The inner end 11b of the piston rod 11 extends through a central hole 25 in the washer 20. An axially extending groove 29 formed in the counterbore 15 of the piston assembly body 18 provides a pathway for flow of damping fluid past the inner end 11b of the piston rod 11. This pathway is in fluid communication with the small gap that exists between the washer 20 and the piston assembly body 18.

On its other side, the washer 20 has a raised formation 27. This is to form a force-transmitting abutting contact with the collar 16 of the piston rod 11. The washer 20 is formed with two cutaways 30 in its central hole 25. These communicate with corresponding recesses 40 on the surface of the raised formation 27. Together, these provide a pathway for flow of damping fluid past the washer 20 and the collar 16.

An alternative form of washer 20 is seen in Figure 3b. This is essentially the same as the washer of Figure 3a in its basic dished design. The difference here is that instead of cutaways 30 for flow of damping fluid, the washer 20 has a pilot hole 31, with a corresponding communicating recess 40 on the surface of its raised formation 27.

Another alternative form of washer 20 is seen in Figure 3c. This is again essentially the same as the washers of Figures 3a and 3b in its basic dished design. The difference here is that instead of cutaways or a pilot hole for flow of damping fluid, the washer 20 is formed with a notch 32 in its central hole 25, with a corresponding communicating recess 40 on the surface of its raised formation 27.

In these washer designs, the cutaways 30, pilot hole 31 and notch 32 may be dimensioned so as to provide a restricted passageway in order to cause resistance to flow of fluid across the piston assembly 10. The recesses 40 in the washer designs may also be used for this purpose, either on their own, or together with the respective cutaways 30, pilot hole 31 or notch 32. Alternatively, another part of the fluid flow path, such as the groove 29, could be used to provide a restricted passageway, in which case the cutaways 30, pilot hole 31 and notch 32, together with their corresponding recesses 40, could be dimensioned to present relatively larger pathways causing less flow resistance. The annular gap between the inner end 11b of the piston rod 11 and the central hole 25 of the washer 20 could also be used to form a restricted passageway.

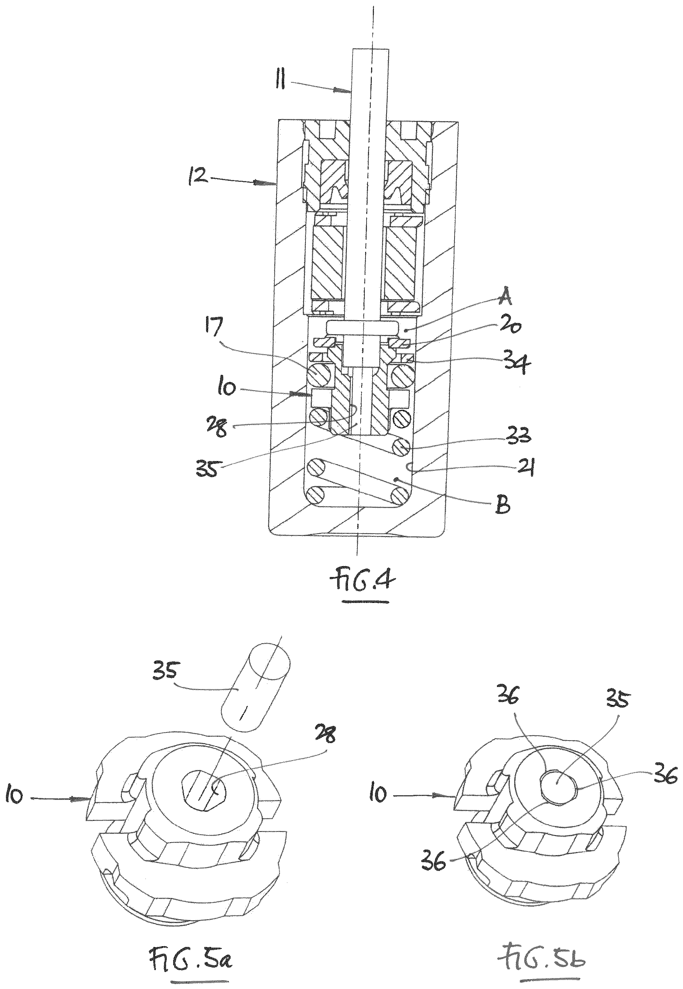

An alternative form of damper design is seen in Figure 4. In this case, a compression spring 33 is located in the lower chamber B between the closed end 12a of the cylinder 12 and the piston assembly 10. The spring 33 acts to bias the piston assembly 10 and hence the piston rod 11 towards its extended position.

Another difference here is that an additional component in the form of an annular ring 34 is interposed between the seal 17 and the washer 20. The purpose of this is to enable the pathway for the return flow of damping fluid back to lower chamber B to be opened up as much as possible. This makes the re-setting of the damper on its return stroke faster and more efficient. The bore of the annular ring 34 is chosen to leave a generous clearance between it and the piston assembly body 18 in order to maximise fluid flow.

The external diameter of the annular ring 34 is chosen to be close to the internal bore 21 of the cylinder 12. This allows the washer 20 to be designed with a smaller outer diameter, so that it sits in the cylinder bore 21 with a bigger annular gap around it to maximise fluid flow. The presence of the annular ring 34 prevents any tendency that the seal 17 might otherwise have had to jam in the annular gap around the washer 20 or wrap around it.

A further difference here is that the through-bore 28 through the piston assembly 10 contains an elongate pin 35 that partly occludes it. The pin 35 is designed to be received in the through-bore 28 as a force-fit, which thereby retains it in position. In this case, the pin 35 is of standard round bar, whilst the cross-sectional shape of the through-bore 28 is in the form of an equilateral triangle with rounded corners. This effectively leaves a pathway for flow of fluid in the form of three arcuate gaps 36. It will be appreciated that this arrangement can be varied, for example by using a pin of non-circular shape in a round through-bore and/or by variations in cross-section along the length of the pin. The pathway can be used to form a restricted passageway or a part of one.

## Claims

1. A piston and cylinder type damper having a cylinder (12) containing damping fluid with a piston assembly (10) mounted therein for reciprocal movement along a linear axis, with the piston assembly (10) dividing the cylinder (12) into two separate chambers (A, B), with a mechanism being provided for controlling flow of damping fluid between said chambers (A, B), the control mechanism including a sealing element (17) movable axially with respect to the piston assembly (10), with the piston assembly (10) comprising a first end stop (20), wherein the first end stop (20) is a washer and a second end stop (19), wherein the second end stop (19) is a flange for limiting said relative axial movement of the sealing element (17), with the sealing element (17) acting on engagement with the washer (20) to constrain flow of damping fluid to a restricted passageway in the piston assembly (10), **characterized in that** the flange (19) forms an integral part of the piston assembly (10), with said washer (20) being provided as a separate component, wherein said washer (20) is of a harder material than the piston assembly (10), wherein said washer (20) includes a fluid flow path that contributes to said restricted passageway.

2. A damper as claimed in claim 1 wherein said washer (20) comprises a cutaway (30).

3. A damper as claimed in claim 1 wherein said washer (20) comprises a pilot hole (31).

4. A damper as claimed in claim 1 wherein said washer (20) comprises a notch (32).

5. A damper as claimed in any one of claims 1 to 4 wherein said washer (20) comprises a recessed area (40) in an axially facing surface.

6. A damper as claimed in any preceding claim and further comprising an annular ring (34) interposed between the sealing element (17) and said washer (20).

7. A damper as claimed in claim 5 further comprising a piston rod (11) engageable with said piston assembly (10), wherein said piston rod (11) is arranged to abuttingly engage said washer (20).

8. A damper as claimed in claim 7 wherein the piston rod (11) abuts said washer (20) by its axially facing surface with said recessed area (40).

9. A damper as claimed in any preceding claim wherein the washer (20) has a dished configuration.

10. A damper as claimed in any preceding claim wherein the piston assembly (10) comprises a through-bore (28) therethrough with a pin element (35) contained therein that partly occludes it, with the gap therebetween forming or at least contributing to said restricted passageway.

11. A damper as claimed in any preceding claim wherein the sealing element (17) is annular.

12. A damper as claimed in any preceding claim wherein said sealing element (17) is in the form of an O-ring.

13. A damper as claimed in any preceding claim wherein said washer (20) has an axial thickness that is approximately half that of the sealing element (17).

## Patentansprüche

1. Dämpfer von der Art mit Kolben und Zylinder, der einen Zylinder (12) aufweist, der Dämpfungsfluid enthält, wobei eine Kolbenanordnung (10) zur wechselseitigen Bewegung entlang einer linearen Achse darin montiert ist, wobei die Kolbenanordnung (10) den Zylinder (12) in zwei separate Kammern (A, B) teilt, wobei ein Mechanismus zum Steuern der Strömung von Dämpfungsfluid zwischen den Kammern (A, B) bereitgestellt ist, wobei der Steuermechanismus ein Dichtungselement (17) beinhaltet, das in Bezug auf die Kolbenanordnung (10) axial beweglich ist, wobei die Kolbenanordnung (10) einen ersten Endanschlag (20), wobei der erste Endanschlag (20) ein Dichtungsring ist, und einen zweiten Endanschlag (19) umfasst, wobei der zweite Endanschlag (19) ein Flansch zum Begrenzen der relativen axialen Bewegung des Dichtungselements (17) ist, wobei das Dichtungselement (17) auf einen Eingriff mit dem Dichtungsring (20) hin wirkt, um die Strömung von Dämpfungsfluid auf einen verengten Durchgangsweg in der Kolbenanordnung (10) zu beschränken,
**dadurch gekennzeichnet, dass** der Flansch (19) einen integralen Bestandteil der Kolbenanordnung (10) bildet, wobei der Dichtungsring (20) als eine separate Komponente bereitgestellt ist, wobei der Dichtungsring (20) aus einem härteren Material besteht als die Kolbenanordnung (10), wobei der Dichtungsring (20) einen Fluidströmungsweg beinhaltet, der zu dem verengten Durchgangsweg beiträgt.

2. Dämpfer nach Anspruch 1, wobei der Dichtungsring (20) eine Aussparung (30) umfasst.

3. Dämpfer nach Anspruch 1, wobei der Dichtungsring (20) eine Pilotbohrung (31) umfasst.

4. Dämpfer nach Anspruch 1, wobei der Dichtungsring (20) eine Kerbe (32) umfasst.

5. Dämpfer nach einem der Ansprüche 1 bis 4, wobei der Dichtungsring (20) in einer in eine axiale Richtung weisenden Fläche einen vertieften Bereich (40) umfasst.

6. Dämpfer nach einem vorhergehenden Anspruch, der ferner einen kreisförmigen Ring (34) umfasst, der zwischen dem Dichtungselement (17) und dem Dichtungsring (20) eingesetzt ist.

7. Dämpfer nach Anspruch 5, der ferner eine Kolbenstange (11) umfasst, die mit der Kolbenanordnung (10) in Eingriff gelangen kann, wobei die Kolbenstange (11) derart angeordnet ist, dass sie mit dem Dichtungsring (20) in anliegendem Eingriff steht.

8. Dämpfer nach Anspruch 7, wobei die Kolbenstange (11) mit ihrer in eine axiale Richtung weisenden Fläche mit dem vertieften Bereich (40) an dem Dichtungsring (20) anliegt.

9. Dämpfer nach einem vorhergehenden Anspruch, wobei der Dichtungsring (20) eine konkav gewölbte Gestaltung aufweist.

10. Dämpfer nach einem vorhergehenden Anspruch, wobei die Kolbenanordnung (10) durch sich hindurch eine Durchgangsbohrung (28) mit einem darin enthaltenen Stiftelement (35) umfasst, das diese teilweise verschließt, wobei der Spalt dazwischen den verengten Durchgangsweg bildet oder zumindest dazu beiträgt.

11. Dämpfer nach einem vorhergehenden Anspruch, wobei das Dichtungselement (17) ringförmig ist.

12. Dämpfer nach einem vorhergehenden Anspruch, wobei das Dichtungselement (17) in Form eines O-Rings vorliegt.

13. Dämpfer nach einem vorhergehenden Anspruch, wobei der Dichtungsring (20) eine axiale Dicke aufweist, die ungefähr die Hälfte der des Dichtungselements (17) beträgt.

## Revendications

1. Amortisseur de type piston et cylindre présentant un cylindre (12) contenant un liquide d'amortissement avec un ensemble piston (10) monté en son sein pour un mouvement de va-et-vient le long d'un axe linéaire, l'ensemble piston (10) divisant le cylindre (12) en deux chambres distinctes (A, B) avec un mécanisme qui est fourni pour réguler l'écoulement de liquide d'amortissement entre lesdites chambres (A, B), le mécanisme de régulation comprenant un élément d'étanchéité (17) mobile axialement par rapport à l'ensemble piston (10), l'ensemble piston (10) comprenant une première butée d'extrémité (20), dans lequel la première butée d'extrémité (20) est une rondelle, et une seconde butée d'extrémité (19), dans lequel la seconde butée d'extrémité (19) est une bride permettant de limiter ledit mouvement axial relatif de l'élément d'étanchéité (17), l'élément d'étanchéité (17) agissant lorsqu'il vient au contact de la rondelle (20) pour contraindre le liquide d'amortissement à s'écouler dans un passage restreint dans l'ensemble piston (10), **caractérisé en ce que** la bride (19) fait partie intégrante de l'ensemble piston (10), ladite rondelle (20) étant fournie en tant que composant distinct, dans lequel ladite rondelle (20) est composée d'un matériau plus dur que l'ensemble piston (10), dans lequel ladite rondelle (20) comprend un trajet d'écoulement de fluide qui contribue audit passage restreint.

2. Amortisseur selon la revendication 1 dans lequel ladite rondelle (20) comprend une découpe (30).

3. Amortisseur selon la revendication 1 dans lequel ladite rondelle (20) comprend un trou pilote (31).

4. Amortisseur selon la revendication 1 dans lequel ladite rondelle (20) comprend une encoche (32).

5. Amortisseur selon l'une quelconque des revendications 1 à 4 dans lequel ladite rondelle (20) comprend une zone en creux (40) dans une surface dirigée axialement.

6. Amortisseur selon l'une quelconque des revendications précédentes et comprenant en outre une bague annulaire (34) interposée entre l'élément d'étanchéité (17) et ladite rondelle (20).

7. Amortisseur selon la revendication 5 comprenant en outre une tige de piston (11) pouvant venir au contact dudit ensemble piston (10), dans lequel ladite tige de piston (11) est agencée pour venir en butée au contact de ladite rondelle (20).

8. Amortisseur selon la revendication 7 dans lequel ladite tige de piston (11) est en butée avec ladite rondelle (20) par sa surface dirigée axialement avec ladite zone en creux (40).

9. Amortisseur selon l'une quelconque des revendications précédentes dans lequel la rondelle (20) présente une configuration concave.

10. Amortisseur selon l'une quelconque des revendications précédentes dans lequel l'ensemble piston (10) comprend un trou traversant (28) à travers celui-ci avec un élément broche (35) contenu en son sein qui l'occlut partiellement, l'espace entre eux formant ledit passage restreint ou au moins contribuant à ce dernier.

11. Amortisseur selon l'une quelconque des revendications précédentes dans lequel l'élément d'étanchéité (17) est annulaire.

12. Amortisseur selon l'une quelconque des revendications précédentes dans lequel ledit élément d'étanchéité (17) présente la forme d'un joint torique.

13. Amortisseur selon l'une quelconque des revendications précédentes dans lequel ladite rondelle (20) présente une épaisseur axiale qui fait environ la moitié de celle de l'élément d'étanchéité (17).
